# EUROPEAN PATENT SPECIFICATION

(11) **EP 3 628 904 B1**
(45) Date of publication and mention of the grant of the patent: **27.04.2022**
(21) Application number: 18461613.4
(22) Date of filing: 26.09.2018
(51) Int. Cl.: F16K 31/42, F15B 13/043, F16K 31/00

(54) **JET-FLAPPER SERVO VALVE**
STRAHLKLAPPENSERVOVENTIL
SERVOVANNE DE CLAPET À JET

(43) Date of publication of application: 01.04.2020
(73) Proprietor: Hamilton Sundstrand Corporation, Charlotte, NC 28217 (US)
(72) Inventor: Jaskiewicz, Zbigniew, 54-310 Wroclaw (PL)
(74) Representative: Dehns

(56) References cited:
- EP-A1- 2 157 344
- EP-A1- 3 023 647
- EP-A1- 3 045 793
- EP-A2- 0 128 447
- EP-A2- 2 894 774
- WO-A2-95/10710
- BE-A- 666 037
- FR-A1- 2 980 250
- GB-A- 2 043 961
- JP-A- 2004 076 921
- US-A- 2 931 343
- US-A- 3 026 892
- US-A- 3 152 612
- US-A- 3 749 129
- US-A- 4 617 952
- US-A- 6 017 016
- US-B2- 9 303 781

## Description

### TECHNICAL FIELD

This disclosure relates generally to a hydraulic servo valve. This disclosure also relates to a method of controlling an actuator using a hydraulic servo valve.

### BACKGROUND

Servo valves are generally used when accurate position control is required, such as, for example, control of a primary flight surface. Servo valves can be used to control hydraulic actuators or hydraulic motors. They are common in industries which include, but are not limited to, automotive systems, aircraft and the space industry.

A known type of hydraulic servo valve is a jet pipe arrangement. Another known type of hydraulic servo valve is a flapper and nozzle arrangement.

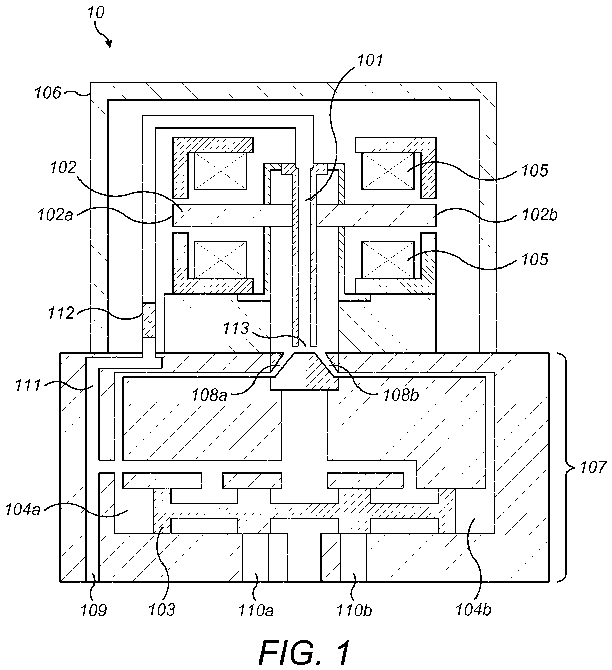

Figure 1 shows generally a known arrangement of a jet pipe hydraulic servo valve 10, not according to the invention.

The hydraulic servo valve 10 shown in Figure 1 represents a jet pipe type arrangement as discussed above. The primary components of the jet pipe type arrangement are a jet tube 101 for receiving a supply pressure, an armature 102 connected to the jet pipe 101, and an electromagnet 105 surrounding the armature 102. In known arrangements, the jet pipe 101 and the armature 102 are separate components. An electrical input (not shown) is connected to the electromagnet 105. When an electrical current is supplied to the electromagnet 105, the armature 102 changes position due to electromagnetic forces supplied by the electromagnet 105. The jet pipe arrangement shown in Fig. 1 is contained within a housing 106.

In the example shown, the armature 102 is connected in a perpendicular manner to the jet pipe 101, or is an integral part of the jet pipe 101 - the integral part being perpendicular to the jet pipe 101. The electromagnet 105 provides a torque that is proportional to the electrical current that is provided by the electrical input. The electromagnet 105 includes coils (not shown) that surround the armature 102 and a set of permanent magnets (not shown) that surround the coils. When a current is applied to the coils, magnetic flux acting on the ends of the armature 102 is developed. The direction of the magnetic flux (force) depends on the sign (direction) of the current. The magnetic flux will cause the armature tips 102a, 102b to be attracted to the electromagnet 105 (current direction determines which magnetic pole is attracting and which one is repelling). This magnetic force creates an applied torque on the jet pipe 101, which is proportional to applied current. The jet pipe 101 rotates and interacts with a spool portion (shown generally as 107 in Fig. 1).

The primary components of the spool portion 107 are receivers 108a and 108b that are in fluid communication with chambers 104a and 104b. There is also provided a spool 103 which is movable between chambers 104a and 104b. The movement of the spool 103 is accurately controlled by the jet pipe 101 and the pressure provided in chambers 104a and 104b.

The hydraulic servo valve 10 also includes a supply pressure inlet flexible tube 111 connected to a supply pressure inlet 109 that provides fluid into the flexible tube 111. The fluid passes through a filter 112 and then through jet pipe 101. At the end of the jet pipe 101 is a nozzle 113.

In use, the jet pipe 101 converts kinetic energy of moving fluid into static pressure. When the jet pipe 101 is centred between the receivers 108a and 108b, the pressure on the spool 103 is equal. However, when the jet pipe 101 is rotated by the armature 102 and electromagnet 105 toward one of the receivers - say 108a, the pressure at this receiver 108a is greater than the other receiver 108b. This creates a load imbalance on the spool 103 causing it to move. If, for example, the jet pipe 101 is rotated toward the receiver 108a, this could cause the spool 103 to move to the right and into chamber 104b, as the pressure would be greater in chamber 104a, and the pressure would be decreased in chamber 104b. As the spool 103 moves from a null position - i.e., when the pressure is equal in chambers 104a and 104b. Outlets 110a and 110b in fluid communication with the spool 103 and chambers 104a, 104b then communicate the pressure imbalance to control an actuator (not shown). The actuator part of the servo valve has the same characteristics as any known hydraulic actuator.

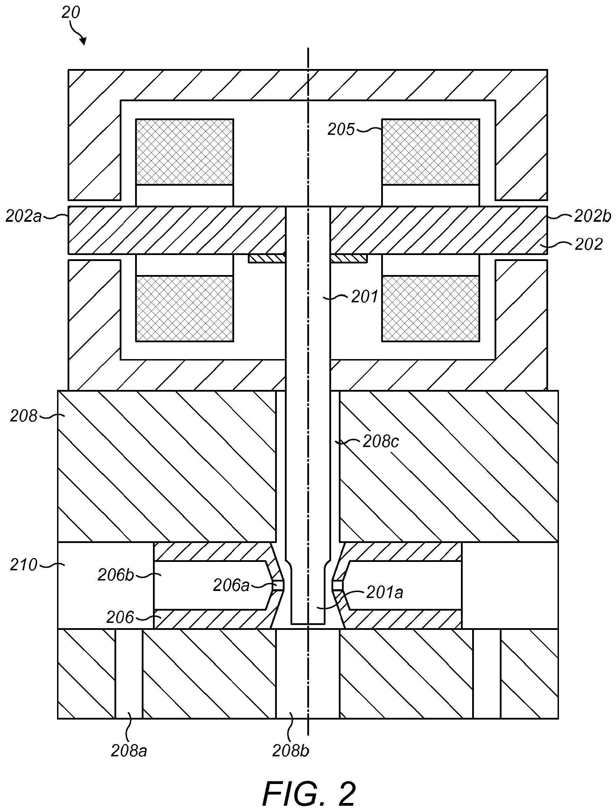

Figure 2 shows generally a known arrangement of a flapper and nozzle hydraulic servo valve 20. Servo valve 20 comprises an electromagnet 205 and armature 202 as discussed in relation to Fig. 1, and like features have been represented with the same numeral, but prefixed with "2xx" instead of "1xx". Servo valve 20 also comprises a flapper 201 disposed in a flapper cavity 208c, and a pair of nozzles 206 disposed in a nozzle housing 208.

In the same manner as the jet pipe servo valve 10 described above in relation to Fig. 1, the electromagnet 205 is connected to an electrical input (not shown) and applies a torque to the armature 202 (including armature tips 202a, 202b) which is connected to or is integral with the flapper 201 that is perpendicular thereto. In this manner, the torque applied to the armature 202 causes the flapper 201 to rotate and interact with the nozzles 206.

Nozzles 206 are housed within a nozzle housing 208 in a respective nozzle cavity 210, and comprise a fluid outlet 206a and fluid inlet 206b. Housing 208 also has a port 208a, which allows communication of fluid to the nozzles 206. The flapper 201 comprises a blocking element 201a at an end thereof which interacts with fluid outlets 206a of nozzles 206 to provide metering of fluid from the fluid outlets 206a to a fluid port 208b in the housing 208. Fluid port 208b in turn allows communication of fluid pressure downstream to a spool and actuator arrangement (not shown), such as discussed above in relation to Fig. 1.

In a similar manner to the positioning of the jet pipe 101 relative to the receivers 108a and 108b discussed in relation to Fig. 1, the positioning of the flapper 201 between nozzles 206 (controlled by the movement of the armature 202 via electromagnet 205) will control the amount of fluid pressure communicated to the spool and actuator (not shown), which can be used to control the actuator.

Although the type of servo valve arrangements shown in Figures 1 and 2 can be effective at controlling an actuator, it has been found that limitations of each type of arrangement nevertheless exist. For example: the flexible tube 111 and jet pipe 101 provide a less compact servo valve; the nozzles 206 must be accurately calibrated to ensure proper operation of the servo valve, which increases the complexity of servo valve assembly and cost; the force needed to provide flapper 201 movement between nozzles 206 does not vary linearly. Moreover, there is also a general desire to reduce servo valve weight and simplify its construction and operation, as well as improve the operational pressures and frequencies that may be realised with such servo valve arrangements.

The present disclosure aims to provide a servo valve that combines aspects of both the prior art jet pipe and flapper and nozzle servo valve arrangements to overcome some of the above limitations. As such, a servo valve of the present disclosure may be referred to as a "jet-flapper" servo valve.

A prior art servo valve having the features of the preamble to claim 1 is disclosed in US 3,749,129. Prior art flapper and nozzle arrangement servo valves are disclosed in US 3 152 612 A, JP 2004 076921 A, BE 666 037, US 3 749 129, EP 3 045 793, US 4 617 952, and US 9 303 781 B2. Prior art jet pipe arrangement servo valves are also disclosed in FR 2 980 250 and EP 3 023 647.

### SUMMARY

The present disclosure relates to a hydraulic servo valve in accordance with claim 1.

In one embodiment of the above hydraulic servo valve, the member comprises a flapper connected and extending perpendicular to an armature. An electromagnet surrounds the armature, and electrical energisation of the electromagnet produces a torque on the armature that bends and/or rotates the flapper.

In any alternative embodiment of the above hydraulic servo valve, the member comprises a piezoelectric element. Electrical energisation of the piezoelectric element is configured to bend the element and provide the aforementioned bend and/or rotation. The piezoelectric element may comprise a piezoelectric bimorph, which may be cantilevered at an axial end thereof. The bimorph may comprise a first material layer and a second material layer sandwiched together. The first material layer comprises a piezoelectric material and the second material layer comprises one of a piezoelectric material or a non-piezoelectric material. Alternatively, instead of having first and second material layers, the piezoelectric element may comprise a first piezoelectric actuator extending axially parallel to a second piezoelectric actuator. In one example, the piezoelectric actuators may be piezoelectric stacks.

In a further embodiment of the above hydraulic servo valve, the servo valve further comprises a return line fluidly connected to the first and second spool chambers and the spool cavity, and a nozzle and control orifice disposed in the return line. The nozzle and control orifice are configured to provide a constriction for adjusting a fluid pressure in the return line. The constriction may be adjustable, for example, by the nozzle being adjustable.

The present disclosure also relates to a method of controlling an actuator using the hydraulic servo valve of any of the above embodiments in accordance with claim 10.

### BRIEF DESCRIPTION OF THE DRAWINGS

Figure 1 shows a known arrangement of a jet pipe servo valve, not according to the invention.
Figure 2 shows a known arrangement of a flapper and nozzle servo valve, not according to the invention.
Figure 3A shows an example of a servo valve in accordance with the present disclosure in a neutral (or null) position.
Figure 3B shows a magnified view of a portion of the servo valve of Figure 3A.
Figure 3C is a cross-sectional view of the servo valve of Figure 3A along line 1-1.
Figure 3D is a cross-sectional view of the servo valve of Figure 3C along line 2-2.
Figure 3E shows an example of the servo valve of Figure 3A in a pressure imbalance position.
Figure 3F shows a magnified view of a portion of the servo valve of Figure 3E.
Figures 4A-4C show a magnified view of a portion of the servo valve of Figure 3A at a neutral position, a slight pressure imbalance position and a maximum pressure imbalance position, respectively.
Figure 5 shows an alternative example of a servo valve not according to the invention.

### DETAILED DESCRIPTION

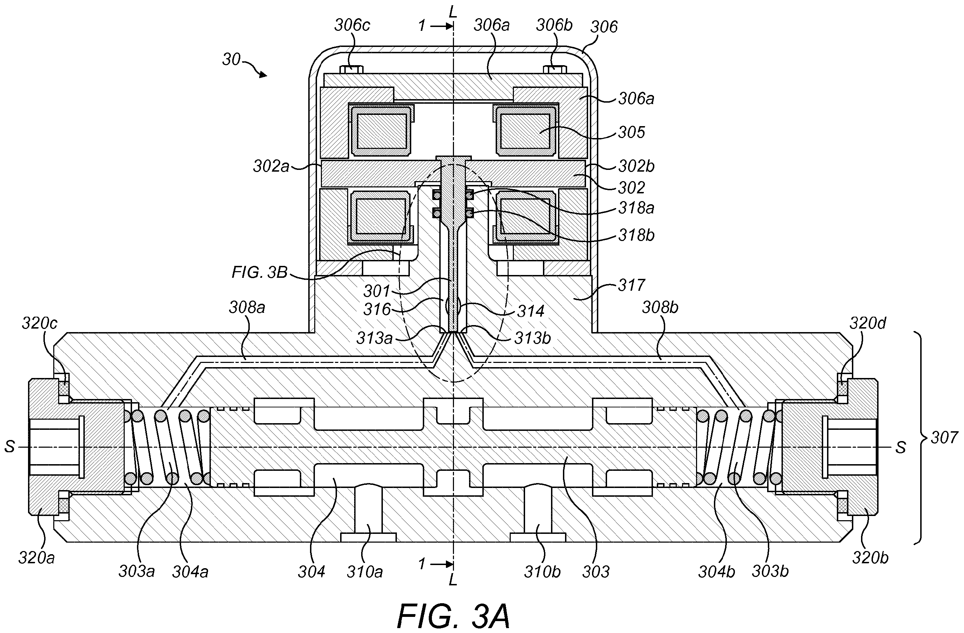

Figures 3A to 4C show a hydraulic servo valve 30 in accordance with an embodiment of the present disclosure. The hydraulic servo valve 30 shown in Figs. 3A to 4C replaces the jet pipe arrangement of Fig. 1 and the flapper and nozzle arrangement of Fig. 2 with an alternative means of moving a spool 303.

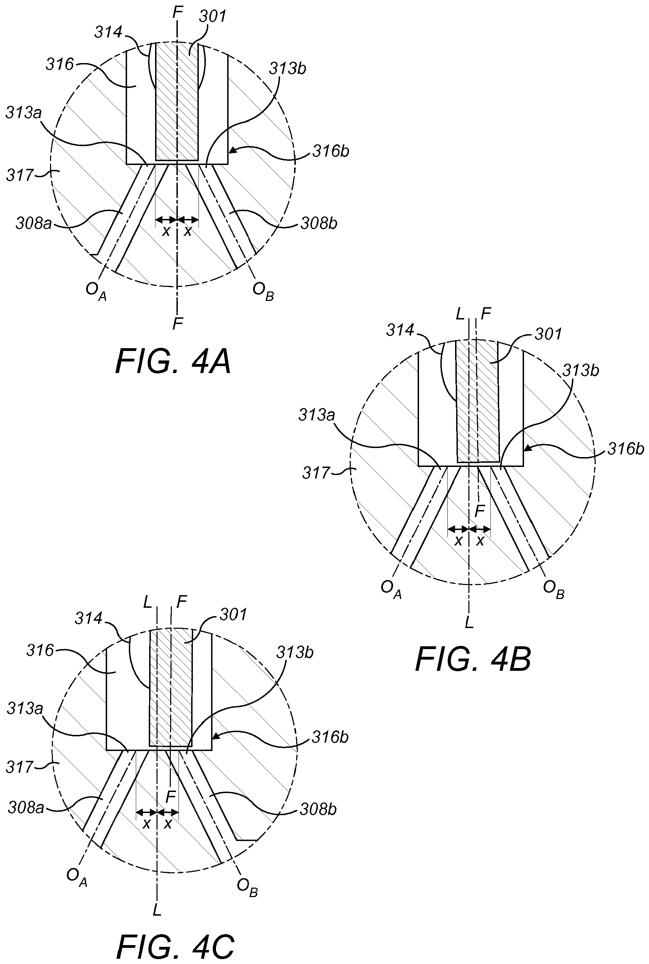

In the embodiments of Figs. 3A to 4C, the servo valve 30 comprises a flapper 301 (i.e. flapper arm). The flapper 301 is disposed in a fluid injection cavity 316. Fluid injection cavity 316 is a substantially cylindrical cavity disposed in a servo valve body 317, and it extends along a longitudinal axis L-L of the servo valve 30. Flapper 301 is movable (e.g. rotatably from left to right in as shown in Figs. 3A to 4C - i.e. perpendicular to longitudinal axis L-L) within the fluid injection cavity 316. The flapper 301 may also, or alternatively bend so as to move an end portion of the flapper in the same direction (as shown in, e.g., Figs. 4A-4C).

The servo valve 30 comprises an electromagnet 305 and armature 302 connected to the flapper 301 in the same manner as discussed in relation to Fig. 2, and like features have been represented with the same numeral, but prefixed with "3xx" instead of "2xx". When the electromagnet 305 is activated the magnetic biasing of the armature tips 302a, 302a causes rotation of the flapper 301 in the fluid injection cavity 316.

In the depicted embodiment, the armature 302 and the electromagnet 305 are disposed within a housing 306 that is coupled to the servo valve body 317, and are supported therein via attachment to a supporting frame 306a and fasteners 306b-306e.

Fluid is supplied to the cavity 316 by a fluid injection opening 314 (or more than one) that is connected to a fluid supply pressure inlet 309 via supply lines 309a and 311 in the servo valve body 317. Supply line 309a is sealed from the exterior of the servo valve body 317 when in use by a cap 321a that has an O-ring seal 321b disposed there around. Cap 321a and O-ring seal 321b are also configured to be removable from the supply line 309a (e.g. via threaded engagement or interference fit with the servo valve body 317) for assembly and maintenance purposes.

Cavity 316 is fluidically isolated from the armature 302 and the electromagnet 305 by seals 318a, 318b, that are positioned at a first axial end 316a of the cavity 316, proximate the armature 302. Seals 318a, 318b are disposed around the flapper 301 in annular recesses 317a, 317b in the servo valve body 317, and prevent fluid from the cavity 316 being communicated to the armature 302 and electromagnet 305 (e.g. by passing around the flapper 301). Seals 318a, 318b may be any suitable type of seal e.g. a ring seal or a bearing seal.

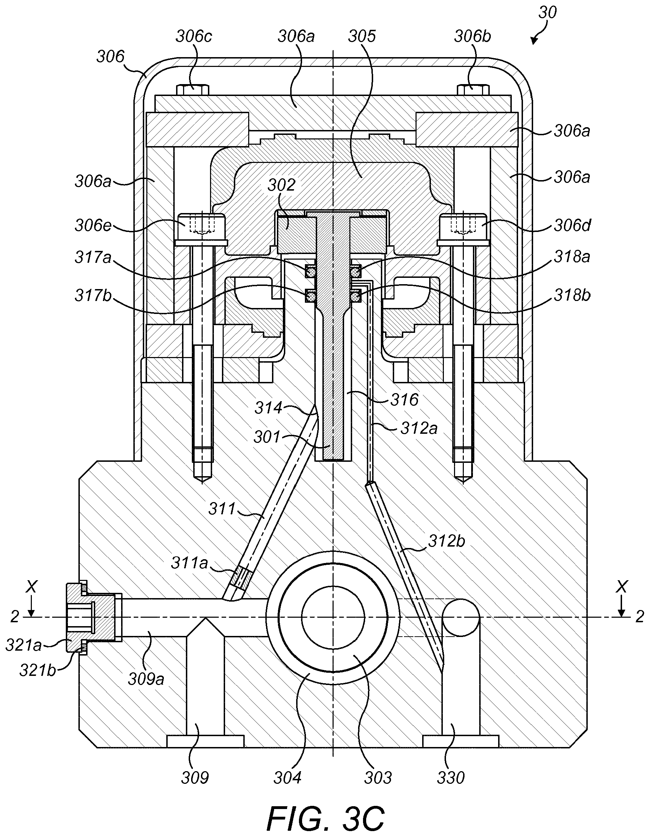

Referring to Fig. 3C, a fluid drainage line 312a is disposed (axially) between the seals 318a, 318b. Fluid drainage line 312a is disposed within the servo valve body 317, and is connected to a fluid return line 312b, and in-turn a fluid return port 330, that allows communication of supply fluid to a return circuit (not shown). Is this manner, fluid drainage line 312a allows supply fluid from the cavity 316 that manages to bypass seal 318b to be drained back into the fluid return circuit, before it has a chance to bypass seal 318a and egress into the armature 302 and electromagnet 305 arrangement. This ensures the servo valve 30 does not lose operating fluid pressure, and prevents the armature 302 and electromagnet 305 from being damaged by hydraulic fluid.

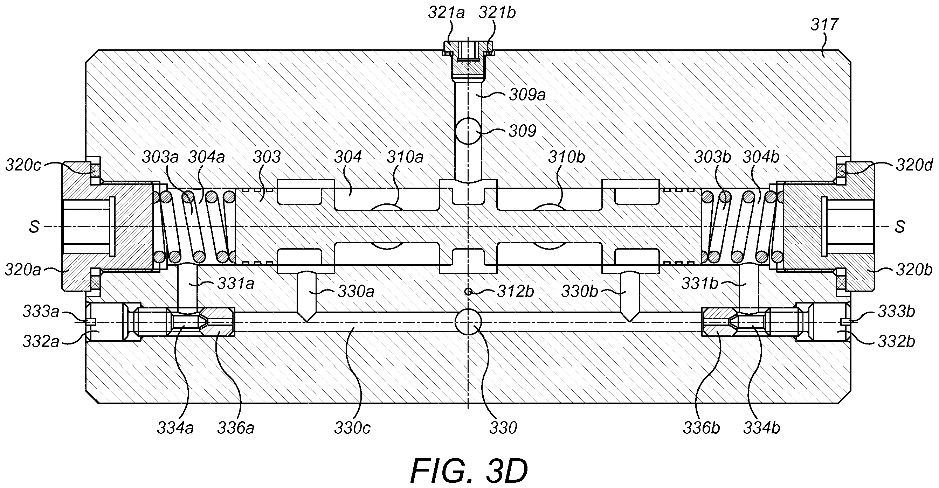

As also shown in Fig. 3C, a control orifice 311a may be provided in the supply line 311. The control orifice 311a provides a constriction in the supply line 311 that allows calibration of the degree of spool movement for a given pressure imbalance. Control orifices can also be provided in the drainage line 312a, return line 312b, or any other part of the return circuit for the same purposes, and will be discussed in more detail below, when referring to Fig. 3D.

At a second axial end 316b of the cavity 316 (opposite the first axial end 316a) there are two receivers 308a, 308b forming respective openings 313a, 313b into the cavity 316 that allow communication of supply fluid pressure from the cavity 316 to the spool 303. The openings 313a, 313b are both spaced an equal and opposite distance from the longitudinal axis L-L of the servo valve 30 in a direction perpendicular thereto, which corresponds to the longitudinal axis F-F of the flapper 301 when it is in the neutral position. For example, as shown in Figs. 4A to 4C, the central axis O_{A}, O_{B} of each opening 313a, 313b is spaced an equal distance X from the longitudinal axis F-F, in a direction perpendicular to the longitudinal axis F-F. As will be discussed in more detail below, the flapper 301 is selectively moved (e.g. bended and/or rotated) to vary how much fluid pressure is communicated to each of the openings 313a, 313b and receivers 308a, 308b.

By spacing the openings 313a, 313b equally apart perpendicularly relative to the longitudinal axis F-F of the flapper 301 when it is in a neutral position, a linearly varying pressure imbalance due to flapper rotation 301 (discussed in more detail below) can be provided.

In the same manner as the receivers 108a and 108b of Fig. 1 discussed above, receivers 308a and 308b are in fluid communication with chambers 304a and 304b of a spool portion 307 of the servo valve 30. A spool 303 is disposed in a spool cavity 304, and is in fluid communication and movable between chambers 304a and 304b along a spool axis S-S. In addition to the receivers 308a, 308b and the spool 303, the spool portion 307 of the servo valve 30 also includes respective springs 303a, 303b in chambers 304a and 304b, which provide a bias on the spool 303 back towards a neutral position. In this manner, springs 303a, 303b can help meter the spool 303 movement and force it to return to the neutral position when pressure imbalances in the chambers 304a and 304b are removed. The spool portion 307 also includes caps 320a, 320b having O-ring seals 320c, 320d disposed there around. Caps 320a, 320b and O-ring seals 320c, 320d serve to seal the chambers 304a, 304b from the exterior of the servo valve 30 when in use, but are also configured to be removable therefrom (e.g. via threaded engagement or interference fit with the servo valve body 317) for assembly and maintenance purposes.

As shown in Fig. 3D, the spool portion 307 further comprises a series of return lines 330a, 330b, 330c, 331a, 331b disposed in the servo valve body 317 that permit fluid communication from the spool cavity 304 and chambers 304a, 304b to the return port 330. This allows communication of supply fluid used to move the spool 307 to the return circuit (not shown). Spool cavity return lines 330a and 330b allow fluid communication between the spool cavity 304 and the return port 330 via the return line 330c. Chamber return lines 331a and 331b allow fluid communication between the spool chambers 304a and 304b and the return port 330 via the return line 330c.

Downstream of each of the chamber return lines 331a, 331b there is a nozzle 334a, 334b and control orifice 336a, 336b arrangement (as briefly discussed above in relation to Fig. 3C). The nozzles 334a and 334b deliver fluid through the control orifices 336a and 336b to return line 330c, and define a constriction at the outlet of each nozzle 334a, 334b that can be used to adjust the degree of spool movement for a given pressure imbalance (as discussed above in relation to Fig. 3C).

The size of the constriction provided by the nozzles 334a, 334b and orifices 336a, 336b can be adjusted and is set before during initial servo valve calibration i.e., before operational use. For example, the installer of the servo valve 30 can have a set of nozzles of varying inner diameter/outlet size that can be inserted into the orifices 336a, 336b to achieve a desired constriction size. Alternatively, a nozzle with an adjustable opening size may be inserted into the orifices 336a, 336b. As the skilled person will understand, the constriction size necessary would be known depending on the design and operating requirements of a particular servo valve for a particular application and operating environment.

The nozzles 334a, 334b may be held in the orifices 336a, 336b, for instance, by threaded engagement or press-fit. In the depicted embodiment, screws 332a and 332b are used to push and hold the nozzles 334a, 334b in place against the orifices 336a, 336b. Screws 332a and 332b are threadably engaged to the servo valve body 317 and they can be removed or their positioning adjusted using screw heads 333a, 333b and a screw driver (not shown).

In the same manner as the jet pipe arrangement of Fig. 1 discussed above, the spool portion 307 also features outlets 310a and 310b that are in fluid communication with an actuator (not shown) downstream. The outlets 310a and 310b allow communication of pressure imbalances from the spool potion 307 to the actuator, in order to control actuator movement. As will be understood by the skilled person, any suitable hydraulic actuator may be used.

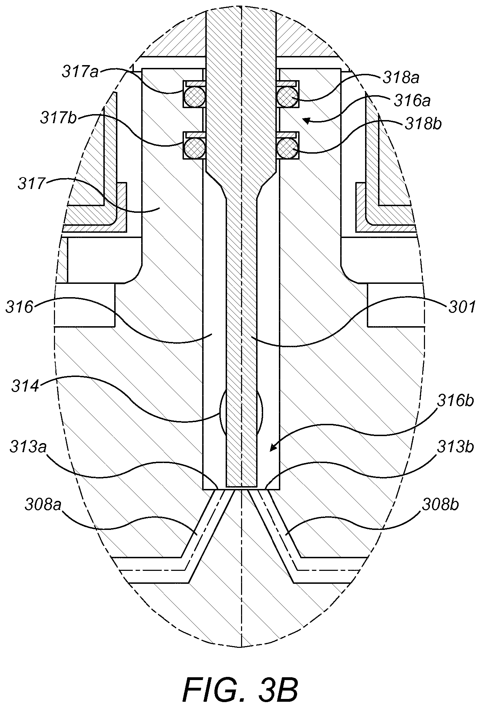

As shown in Figs. 3A, 3B and 4A, when a neutral spool position is required, the flapper 301 is positioned centrally between the receiver openings 313a and 313b, such that each receiver 308a, 308b communicates an equal proportion of fluid pressure to the chambers 304a and 304b.

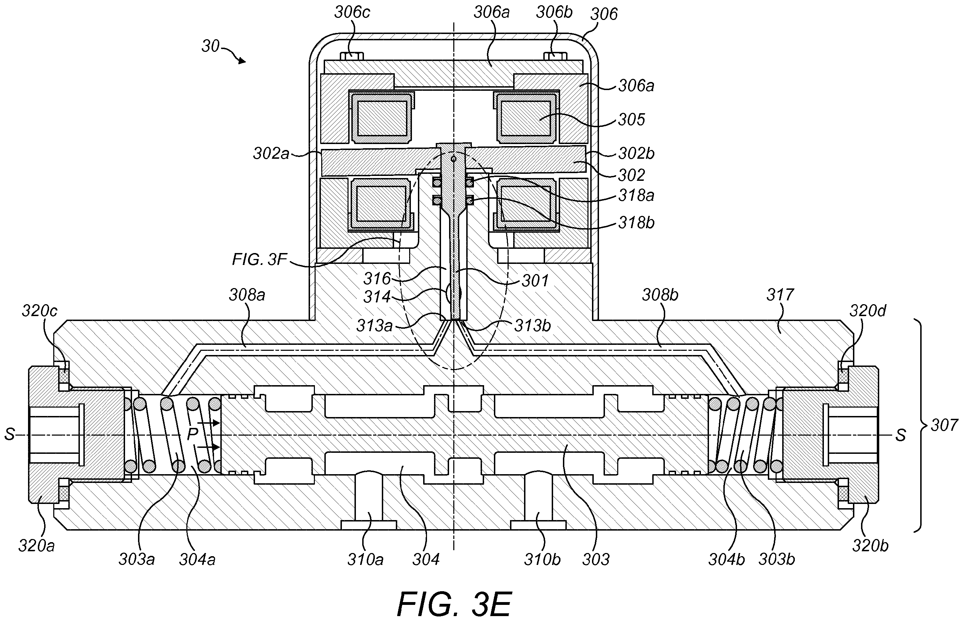

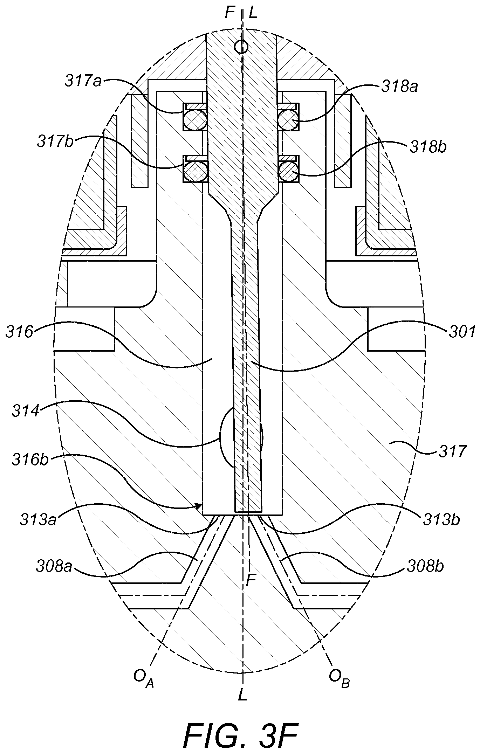

As shown in Figs. 3E, 3F, 4B and 4C, when movement of the actuator is required, the flapper 301 is rotated within the cavity 316 perpendicular to axis L-L (by activation of the electromagnet 305 and armature 302 - as discussed above), such that one of the receiver openings 313a, 313b is more occluded than the other (in the depicted example flapper 301 is moved to occlude opening 313b more so than opening 313a). In this manner, the less occluded opening receives a higher fluid pressure from the fluid in the cavity 316 supplied by the injection opening 314 than the opening that is more occluded by the flapper 301. This generates a pressure imbalance. This pressure imbalance is communicated to the chambers 304a and 304b via the receivers 308a, and 308b, which causes the spool 303 to be moved accordingly (in the depicted example spool 303 is accordingly moved to the right along spool axis S-S, as shown by arrows P), and in turn move the actuator (as discussed above).

The degree of pressure imbalance imparted to the spool 303 (and thus amount of actuator movement) can be adjusted by controlling the degree of flapper 301 rotation. For instance, as shown in Figs. 4B and 4C, flapper 301 can be rotated relative to the longitudinal axis L-L of the servo vale 30 by a small amount R₁ to only slightly occlude the opening 313b, or can be rotated a larger amount R₂ to fully occlude the opening 313b. Although Fig. 4B only shows the R₁ position, it is to be understood that flapper 301 rotation can be varied continuously between the neutral position (e.g. in Fig. 4A) and the maximum rotation position (i.e. can be of any amount below the maximum rotation position).

In the depicted embodiment, the maximum allowed rotation of the flapper 301 is set to correspond to the distance R₂, which corresponds to an amount that fully occludes the opening 313b and fully opens the opening 313a to cavity 316. This allows the maximum flapper 301 rotation to provide the maximum spool 303 and actuator movement available.

As will be appreciated when looking at Fig. 3E, it may be necessary to limit the range of rotation of the flapper 301 such that it doesn't contact the cavity 316 walls, or such that the armature 302 does not make contact with the frame 306a supporting the electromagnet 305. This is because such contact could damage the flapper 301 and the armature 302.

The amount of flapper 301 rotation is controlled by the amount of current supplied to the electromagnet 305. For instance, supplying a larger current will produce a larger torque on armature 302, and therefore produce a larger rotation of flapper 301. Thus, the maximum amount of flapper 301 rotation can be decided by limiting the current supplied to the electromagnet 305. Any amount of flapper 301 rotation between the neutral and maximum rotation positions can be produced by providing an appropriate amount of current below that needed to provide maximum flapper 301 rotation. The direction of flapper 301 rotation can also be changed by reversing the polarity of the current (i.e. reversing the direction of torque supplied to the armature 302 by the electromagnet 305 - as discussed above in relation to Fig. 1). Furthermore, the amount of rotation necessary to occlude and open the openings 313a and 313b can be adjusted by spacing the openings 313a and 313b further apart or closer together.

In this manner, the operating currents and frequencies of the servo valve 30 can be fully adjusted to suit a particular application. For example, a higher frequency response and more energy efficient servo valve 30 may be realised by reducing the maximum current supplied to the electromagnet 305 to reduce the range of flapper 301 rotation and moving openings 313a and 313b closer together to ensure the full range of actuator movement is still available.

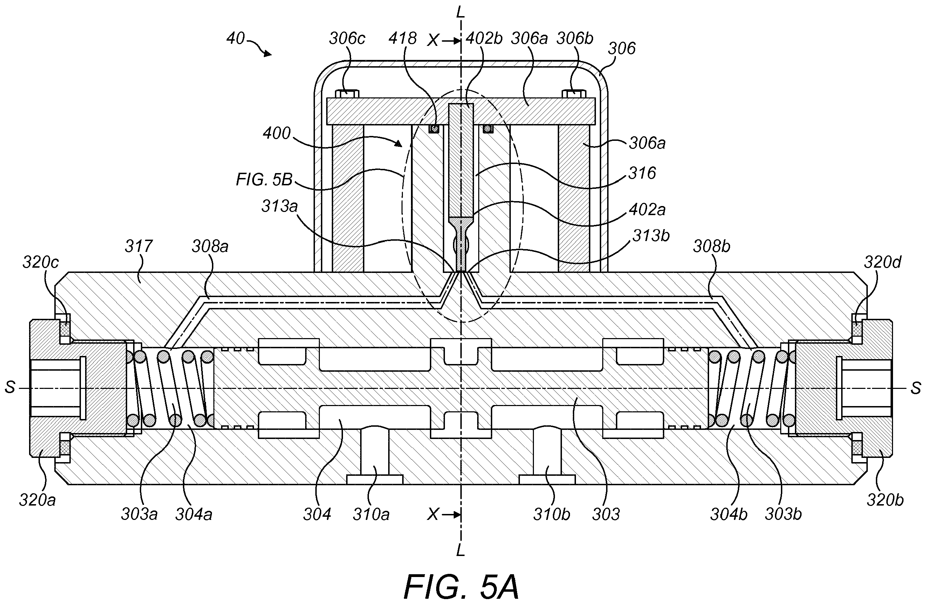

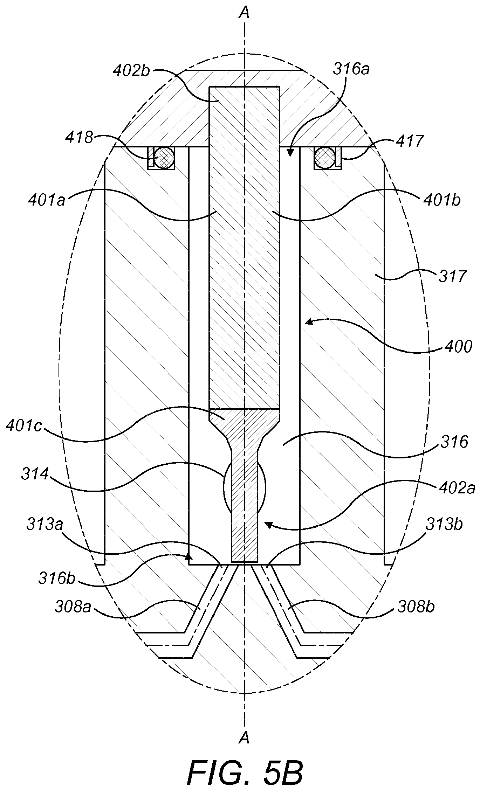

Figures 5A and 5B show an example of an alternative embodiment of a hydraulic servo valve 40 in accordance with the present disclosure. Servo valve 40 differs from the embodiments of servo valve 30 shown in Figs. 3A to 4C only in that the flapper 301 and the associated armature 302 and electromagnet 305 components have been replaced with a piezoelectric element 400.

The piezoelectric element 400 is disposed in the cavity 316 and configured to interact with the openings 313a and 313b in the same manner as the flapper 301 of Figs. 3A to 4C. The piezoelectric element 400 is configured such that an application of voltage thereto will result in a bending of the piezoelectric element 400 to effectively rotate the piezoelectric element 400 relative to the longitudinal axis L-L, and thus, selectively open or occlude the openings 313a and 313b. Exemplary embodiments of such piezoelectric element 400 configurations are discussed below in relation to Figures 5A and 5B. However, it is to be understood that many different piezoelectric element 400 configurations that result in the aforementioned bending and rotation can be conceived, and therefore, the piezoelectric element 400 of the present disclosure is not to be limited to such specific embodiments.

In various embodiments, the piezoelectric element 400 is a piezoelectric bimorph 400. Piezoelectric bimorphs are known, and can be used to provide a cantilevered element that can be bent due to the application of an electrical signal (e.g. voltage) thereto.

Typically, a piezoelectric bimorph comprises a first piezoelectric material layer sandwiched to a second non-piezoelectric material layer. Applying a voltage to the first piezoelectric material layer will cause it to change dimension (e.g. length). The second material layer must then deform to accommodate the dimensional change in the first material layer (in a similar manner to a bimetallic strip). If the bimorph is cantilevered at one end, this deformation results in a bending motion. The embodiments discussed below, exploit this bending motion. If the bending deformation is under the elastic limit of the material layers, then the material layers will return back to their original shape, once the voltage is removed.

In certain bimorph designs, a second piezoelectric material layer can be used, instead of the non-piezoelectric material layer. The second piezoelectric material layer can be wired in reverse to the first piezoelectric material layer, such that application of a voltage to the bimorph results in an increase in length of one of the layers and a decrease in length of the other. This likewise produces a bending deformation. Alternatively, instead of piezoelectric material layers, the bimorph could use two piezoelectric actuators. It is also known that other material layers may be present in between and/or around the first and second material layers in either of the above bimorph designs.

In the depicted embodiment of Figs. 5A and 5B, not according to the invention, piezoelectric bimorph 400 comprises two material layers 401a and 401b that extend to form a blocking portion 401c, and which are disposed in the cavity 316. The layers 401a, 401b extend parallel to each other along a longitudinal axis A-A of the bimorph 400, and contact each other along this axis A-A (i.e. such that the layers 401a and 401b are a mirror image of each other - or are "sandwiched together"). The blocking portion 401c extends axially towards the openings 313a and 313b at a first axial end 402a of the bimorph 400, and is configured to interact with the openings 313a and 313b in the same manner as the flapper 301 discussed above in relation to Figs. 3A to 4C. Accordingly, instead of being spaced apart relative to the flapper axis F-F, the openings 313a and 313b of this embodiment are spaced apart relative to the axis A-A.

Although the depicted blocking portion 401c has been shaped to be thinner near the openings 313a and 313b, within the scope of this disclosure, the blocking portion 401c is only defined as the portion of the material layers 401a, 401b that is used to interact with the openings 313a and 313b, and can take any suitable shape (e.g. it may not be shaped differently to the rest of the layers 401a and 401b at all).

The bimorph 400 is fixedly coupled to the support plate 306a at a second axial end 402b thereof, opposite the first axial end 402a. In this manner, bimorph 400 forms a cantilever extending from the support plate 306a.

As discussed above, first and second material layers 401a and 401b can be a combination of a piezoelectric material layer and a non-piezoelectric material layer, or a combination of two piezoelectric material layers. In addition, within the scope of the present disclosure, additional material layers may be present in between or around the layers 401a and 401b when they are sandwiched together.

The material layers 401a and 401b are connected to an electrical input (not shown), and as discussed above, the application of voltage thereto will result in a change in dimension to the piezoelectric material layer(s) thereof. The piezoelectric material layer(s) are configured to either lengthen or shrink in the axial direction (i.e. parallel to the longitudinal axis A-A) in response to the voltage. This will result in the bimorph 400 undergoing a bending deflection that will cause an effective rotation of the blocking portion 401c relative to the openings 313a and 313b. In this manner, varying the amount of voltage used to energise the bimorph 400 can be used to control the rotation of the blocking portion 401c and thus, control the degree of spool 303 and actuator movement, in the same way as the embodiments of Figs. 3A to 4C discussed above.

The degree of bending can be varied by the amount of voltage used to energise the bimorph 400. In this manner, the maximum rotational range of the blocking portion 401c can be set by having a maximum voltage that corresponds to the maximum desired rotation (in a similar manner to the flapper 301 discussed above). A continuous and linear adjustment of the voltage supplied to the bimorph 400 can also be used to result in a continuous, linear increase or decrease in the bending deformation thereof, and subsequently in the force applied to the actuator.

The piezoelectric material layer(s) may be comprised of any suitable piezoelectric material and/or may be any suitable piezoelectric actuator (e.g. a piezoelectric stack). Such piezoelectric materials and actuators are well-known, and therefore specific embodiments thereof do not warrant further discussion.

As shown in Figs. 5A and 5B, a seal 418 is disposed in an annular recess 417 at the first axial end 316a of the cavity 316, and is configured to provide a fluid tight seal between the servo valve body 317 and the support plate 306a. This prevents fluid in cavity 316 from leaking out of the cavity 316 to the exterior of the servo valve body 317 and potentially damaging the electrical inputs (not shown) for the piezoelectric element 400. It also ensures operational fluid pressure is not lost through leakage. Seal 418 may be any suitable seal, such as a ring seal or a bearing seal.

Although seal 418 is depicted as a single seal, which is outside the scope of the claims, it is to be noted that the double axially spaced seal arrangement of seals 318a and 318b discussed in relation to Figs. 3A to 4C and in accordance with the claims is to be utilised in the embodiments of Figs. 5A and 5B. Likewise, the drainage line 312a and (optionally) return line 312b linked thereto are also to be utilised in these embodiments.

It is to be appreciated that by replacing the jet pipe and flapper and nozzle arrangements of the prior art with the embodiments of the present disclosure, a more compact servo valve can be realised, which reduces weight, size and complexity. Such reductions in weight and size are particularly advantageous in aerospace applications. In addition, the embodiments of the present disclosure may overcome the aforementioned frequency and operating pressure limitations of the prior art arrangements. The embodiments of the present disclosure may also be able to allow a linear force adjustment of the actuator.

In particular, the use of the piezoelectric element 400 in place of an armature 302 and flapper 301 arrangement, may allow for a particularly compact and lightweight servo valve 40, that can also make finer and more accurate adjustments (i.e. is more sensitive and responsive).

## Claims

1. A hydraulic servo valve (30; 40), comprising:
a fluid injection cavity (316) defining a longitudinal axis (L-L) and a first axial end (316a) opposite a second axial end (316b);
at least one fluid injection opening (314) disposed in the cavity (316) and configured to supply fluid to the cavity (316);
a pair of fluid receiving openings (313a, 313b) at the second axial end (316b) configured to receive fluid from the cavity (316), the pair of fluid receiving openings (313a, 313b) being spaced an equal and opposite distance from the longitudinal axis (L-L) in a direction perpendicular thereto;
a member (301; 401c) disposed in the cavity between the pair of openings (313a, 313b);
a spool (303) located within a spool cavity (304) and between a first spool chamber (304a) and a second spool chamber (304b), wherein the first spool chamber (304a) and the second spool chamber (304b) are of varying volume based on the position of the spool (303) within the spool cavity (304), wherein there are two receivers (308a, 308b) forming the respective openings (313a, 313b) into the cavity (316) that allow communication of supply fluid pressure from the cavity (316) to the spool (303);
a supply pressure inlet (309); and
a supply line (311) connecting the supply pressure inlet (309) to the at least one injection opening (314);
wherein the member (301; 401a-401c) is bendable and/or rotatable relative to the longitudinal axis (L-L) of the cavity (316) between a first position that fully occludes a first of the openings (313b) and fully opens a second of the openings (313a) and a second position that fully opens the first of the openings (313b) and fully occludes the second of the openings (313a), wherein in a neutral position a longitudinal axis (F-F) of the member (301; 401a-401c) corresponds to the longitudinal axis (L-L) of the cavity (316); and
wherein each opening (313a, 313b) is fluidly connected to a respective one of the first and second spool chambers (304a, 304b) via a respective one of the receivers (308a, 308b), such that, in use, when the member (301; 401c) is bended and/or rotated between the first and second positions, the spool (303) moves within the spool cavity (304) to vary the volume of the first and second spool chambers (304a, 304b) in response to fluid pressure communicated from the openings (313a, 313b); and
**characterised in that** the servo valve (30; 40) further comprises:
a pair of seals (318a, 318b) positioned between a body (317) of the servo valve (30; 40) and the member (301; 401a-401c) to prevent fluid escaping the cavity (316), the pair of seals (318a, 318b) disposed in the cavity (316) and spaced axially apart relative to the longitudinal axis (L-L) of the cavity (316); and
a drainage line (312a) disposed axially between the seals (318a, 318b), wherein the drainage line (312a) is configured to drain any fluid that is caught between the pair of seals (318a, 318b).

2. The hydraulic servo valve of claim 1, wherein the member (301; 401c) comprises a flapper (301) connected and extending perpendicular to an armature (302), and the servo valve (30) further comprises an electromagnet (305) surrounding the armature (302);
wherein electrical energisation of the electromagnet (305) produces a torque on the armature (302) to bend and/or rotate the flapper (301).

3. The hydraulic servo valve of claim 1, wherein the member (301; 401a-401c) comprises a piezoelectric element (400), and electrical energisation of the piezoelectric element (400) is configured to bend the element (400).

4. The hydraulic servo valve of claim 3, wherein the piezoelectric element (400) comprises a piezoelectric bimorph.

5. The hydraulic servo valve of claim 4, wherein the bimorph (400) is cantilevered at an axial end (402b) thereof.

6. The hydraulic servo valve of claim 4, wherein the bimorph comprises a first material layer (401a) and a second material layer (401b) sandwiched together, the first material layer (401a) comprising a piezoelectric material, and the second material layer (401b) comprising one of a piezoelectric material or a non-piezoelectric material.

7. The hydraulic servo valve of claims 3 or 4, wherein the piezoelectric element (400) comprises a first piezoelectric actuator (401a) extending axially parallel to a second piezoelectric actuator (401b), wherein, for example, the first and second piezoelectric actuators (401a, 401b) are piezoelectric stacks.

8. The hydraulic servo valve of any preceding claim, further comprising:
a return line (330c) fluidly connected to the first and second spool chambers (304a, 304b) and the spool cavity (304); and
a nozzle (334a, 334b) and control orifice (336a, 336b) disposed in the return line (330c) being configured to provide a constriction for adjusting a fluid pressure in the return line (330c).

9. The hydraulic servo valve of claim 8, wherein the constriction is adjustable, for example, by the nozzle (334a, 334b) being adjustable.

10. A method of controlling an actuator using the hydraulic servo valve of any preceding claim, the method comprising:
supplying fluid to the cavity (316) via the at least one injection opening (314); and **characterised by**
communicating the fluid to the fluid receiving openings (313a, 313b);
bending and/or rotating the member (301; 401c) in order to establish a pressure imbalance between the fluid communicated to each of the fluid receiving openings (313a, 313b); and
communicating the pressure imbalance to the spool (303) located within the spool cavity (304) and between the first spool chamber (304a) and the second spool chamber (304b);
communicating the pressure imbalance from the spool cavity (304) to the actuator; and
communicating the pressure imbalance from the spool (303) to an actuator, in order to control movement of the actuator.

## Patentansprüche

1. Hydraulisches Servoventil (30; 40), umfassend:
einen Fluidinjektionshohlraum (316), der eine Längsachse (L-L) und ein erstes axiales Ende (316a) gegenüber einem zweiten axialen Ende (316b) definiert;
mindestens eine Fluidinjektionsöffnung (314), die in dem Hohlraum (316) angeordnet ist und so konfiguriert ist, dass sie Fluid zum Hohlraum (316) zuführt;
ein Paar Fluidaufnahmeöffnungen (313a, 313b) an dem zweiten axialen Ende (316b), das so konfiguriert ist, dass es Fluid aus dem Hohlraum (316) aufnimmt, wobei das Paar Fluidaufnahmeöffnungen (313a, 313b) eine gleiche und entgegengesetzte Strecke von der Längsachse (L-L) in einer Richtung, die lotrecht dazu ist, beabstandet ist;
ein Bauteil (301; 401c), das in dem Hohlraum zwischen dem Paar Öffnungen (313a, 313b) angeordnet ist;
einen Schieber (303), der innerhalb eines Schieberhohlraums (304) und zwischen einer ersten Schieberkammer (304a) und einer zweiten Schieberkammer (304b) angeordnet ist, wobei die erste Schieberkammer (304a) und die zweite Schieberkammer (304b) ein wechselndes Volumen basierend auf der Position des Schiebers (303) innerhalb des Schieberhohlraums (304) aufweisen, wobei es zwei Aufnahmen (308a, 308b) gibt, die die jeweiligen Öffnungen (313a, 313b) in den Hohlraum (316) ausbilden, die eine Übertragung von Versorgungsfluiddruck vom Hohlraum (316) zum Schieber (303) ermöglichen;
einen Versorgungsdruckeinlass (309); und
eine Versorgungsleitung (311), die den Versorgungsdruckeinlass (309) mit der mindestens einen Injektionsöffnung (314) verbindet;
wobei das Bauteil (301; 401a-401c) in Bezug auf die Längsachse (L-L) des Hohlraums (316) zwischen einer ersten Position, die eine erste der Öffnungen (313b) vollständig verschließt und eine zweite der Öffnungen (313a) vollständig öffnet, und einer zweiten Position, die die erste der Öffnungen (313b) vollständig öffnet und die zweite der Öffnungen (313a) vollständig verschließt, biegbar und/oder drehbar ist, wobei die Längsachse (F-F) des Bauteils (301; 401a-401c) in einer neutralen Position der Längsachse (L-L) des Hohlraums (316) entspricht; und
wobei jede Öffnung (313a, 313b) mit einer jeweiligen aus der ersten und der zweiten Schieberkammer (304a, 304b) über einen jeweiligen der Aufnehmer (308a, 308b) in Fluidverbindung steht, so dass sich im Betrieb, wenn das Bauteil (301; 401c) zwischen der ersten und der zweiten Position gebogen und/oder gedreht wird, der Schieber (303) innerhalb des Schieberhohlraums (304) bewegt, um das Volumen der ersten und der zweiten Schieberkammer (304a, 304b) zu verändern, als Reaktion auf einen Fluiddruck, der von den Öffnungen (313a, 313b) übertragen wird; und
**dadurch gekennzeichnet, dass** das Servoventil (30; 40) ferner Folgendes umfasst:
ein Paar Dichtungen (318a, 318b), das zwischen einem Körper (317) des Servoventils (30; 40) und dem Bauteil (301; 401a-401c) angeordnet ist, um zu verhindern, dass Fluid aus dem Hohlraum (316) austritt, wobei das Paar Dichtungen (318a, 318b) in dem Hohlraum (316) angeordnet ist und axial relativ zur Längsachse (L-L) des Hohlraums (316) beabstandet ist; und
eine Ablassleitung (312a), die axial zwischen den Dichtungen (318a, 318b) angeordnet ist, wobei die Ablassleitung (312a) so konfiguriert ist, dass sie Fluid, das zwischen dem Paar Dichtungen (318a, 318b) gefangen ist, ablässt.

2. Hydraulisches Servoventil nach Anspruch 1, wobei das Bauteil (301; 401c) eine Klappe (301) umfasst, die mit einem Anker (302) verbunden ist und sich lotrecht dazu erstreckt, und wobei das Servoventil (30) ferner einen Elektromagneten (305) umfasst, der den Anker (302) umgibt;
wobei eine elektrische Erregung des Elektromagneten (305) ein Drehmoment auf den Anker (302) erzeugt, um die Klappe (301) zu biegen und/oder zu drehen.

3. Hydraulisches Servoventil nach Anspruch 1, wobei das Bauteil (301; 401a-401c) ein piezoelektrisches Element (400) umfasst, und eine elektrische Erregung des piezoelektrischen Elements (400) so konfiguriert ist, dass sie das Element (400) biegt.

4. Hydraulisches Servoventil nach Anspruch 3, wobei das piezoelektrische Element (400) einen piezoelektrischen Bimorph umfasst.

5. Hydraulisches Servoventil nach Anspruch 4, wobei der Bimorph (400) an einem axialen Ende (402b) davon einseitig eingespannt ist.

6. Hydraulisches Servoventil nach Anspruch 4, wobei der Bimorph eine erste Materialschicht (401a) und eine zweite Materialschicht (401b) umfasst, die miteinander schichtweise angeordnet sind, wobei die erste Materialschicht (401a) ein piezoelektrisches Material umfasst und die zweite Materialschicht (401b) eines aus einem piezoelektrischen Material oder einem nicht piezoelektrischen Material umfasst.

7. Hydraulisches Servoventil nach den Ansprüchen 3 oder 4, wobei das piezoelektrische Element (400) einen ersten piezoelektrischen Aktuator (401a) umfasst, der sich axial parallel zu einem zweiten piezoelektrischen Aktuator (401b) erstreckt, wobei zum Beispiel der erste und der zweite piezoelektrische Aktuator (401a, 401b) piezoelektrische Stapel sind.

8. Hydraulisches Servoventil nach einem der vorstehenden Ansprüche, ferner Folgendes umfassend:
eine Rückführleitung (330c), die in Fluidverbindung mit der ersten und der zweiten Schieberkammer (304a, 304b) und dem Schieberhohlraum (304) steht; und
eine Düse (334a, 334b) und einen Steuerspalt (336a, 336b), die in der Rückführleitung (330c) angeordnet sind und so konfiguriert sind, dass sie eine Drosselstelle zum Anpassen eines Fluiddrucks in der Rückführleitung (330c) bereitstellen.

9. Hydraulisches Servoventil nach Anspruch 8, wobei die Drosselstelle einstellbar ist, zum Beispiel dadurch, dass die Düse (334a, 334b) einstellbar ist.

10. Verfahren zum Steuern eines Aktuators unter Verwendung des hydraulischen Servoventils nach einem der vorstehenden Ansprüche, wobei das Verfahren Folgendes umfasst:
Zuführen von Fluid zum Hohlraum (316) über die mindestens eine Injektionsöffnung (314); und **gekennzeichnet durch**
Leiten des Fluids zu den Fluidaufnahmeöffnungen (313a, 313b);
Biegen und/oder Drehen des Bauteils (301; 401c), um ein Druckungleichgewicht zwischen dem Fluid, das zu jeder der Fluidaufnahmeöffnungen Öffnungen (313a, 313b) geleitet wird, zu erzeugen; und
Übermitteln des Druckungleichgewichts zum Schieber (303), der innerhalb des Schieberhohlraums (304) und zwischen der ersten Schieberkammer (304a) und der zweiten Schieberkammer (304b) angeordnet ist;
Übermitteln des Druckungleichgewichts vom Schieberhohlraum (304) zum Aktuator; und
Übermitteln des Druckungleichgewichts vom Schieber (303) zu einem Aktuator, um die Bewegung des Aktuators zu steuern.

## Revendications

1. Servovanne hydraulique (30 ; 40), comprenant :
une cavité d'injection de fluide (316) définissant un axe longitudinal (L-L) et une première extrémité axiale (316a) à l'opposé d'une seconde extrémité axiale (316b) ;
au moins une ouverture d'injection de fluide (314) étant disposée dans la cavité (316) et conçue pour alimenter la cavité (316) en fluide ;
une paire d'ouvertures de réception de fluide (313a, 313b) à la seconde extrémité axiale (316b) conçues pour recevoir le fluide provenant de la cavité (316), la paire d'ouvertures de réception de fluide (313a, 313b) étant espacées selon une distance égale et opposée par rapport à l'axe longitudinal (L-L) dans une direction perpendiculaire à celui-ci ;
un élément (301 ; 401c) disposé dans la cavité entre les deux ouvertures (313a, 313b) ;
une bobine (303) située dans une cavité de bobine (304) et entre une première chambre de bobine (304a) et une seconde chambre de bobine (304b), dans laquelle la première chambre de bobine (304a) et la seconde chambre de bobine (304b) sont de volume variable en fonction de la position de la bobine (303) dans la cavité de bobine (304), dans laquelle deux récepteurs (308a, 308b) forment les ouvertures respectives (313a, 313b) dans la cavité (316) qui permettent la communication de la pression du fluide d'alimentation entre la cavité (316) et la bobine (303) ;
une entrée de pression d'alimentation (309) ; et
une conduite d'alimentation (311) reliant l'entrée de pression d'alimentation (309) à l'au moins une ouverture d'injection (314) ;
dans laquelle l'élément (301 ; 401a à 401c) peut être courbé et/ou tourné par rapport à l'axe longitudinal (L-L) de la cavité (316) entre une première position qui obstrue complètement une première des ouvertures (313b) et ouvre complètement une seconde des ouvertures (313a), et une seconde position qui ouvre complètement la première des ouvertures (313b) et obstrue complètement la seconde des ouvertures (313a), dans laquelle, en position neutre, un axe longitudinal (F-F) de l'élément (301 ; 401a à 401c) correspond à l'axe longitudinal (L-L) de la cavité (316) ; et
dans laquelle chaque ouverture (313a, 313b) est reliée fluidiquement à une chambre respective parmi la première et la seconde chambres de bobine (304a, 304b) par l'intermédiaire d'un récepteur respectif parmi les récepteurs (308a, 308b), de sorte que, en cours d'utilisation, lorsque l'élément (301 ; 401c) est courbé et/ou tourné entre la première et la seconde positions, la bobine (303) se déplace dans la cavité de bobine (304) pour faire varier le volume des première et seconde chambres de bobine (304a, 304b) en réponse à la pression de fluide communiquée par les ouvertures (313a, 313b) ; et
**caractérisée en ce que** la servovanne (30 ; 40) comprend en outre :
une paire de joints d'étanchéité (318a, 318b) positionnés entre un corps (317) de la servovanne (30 ; 40) et l'élément (301 ; 401a à 401c) pour empêcher le fluide de s'échapper de la cavité (316), la paire de joints d'étanchéité (318a, 318b) étant disposée dans la cavité (316) et espacée axialement par rapport à l'axe longitudinal (L-L) de la cavité (316) ; et
une conduite de drainage (312a) disposée axialement entre les joints d'étanchéité (318a, 318b), dans laquelle la conduite de drainage (312a) est conçue pour évacuer tout fluide qui est piégé entre les deux joints d'étanchéité (318a, 318b).

2. Servovanne hydraulique selon la revendication 1, dans laquelle l'élément (301 ; 401c) comprend un clapet (301) relié à une armature (302) et s'étendant perpendiculairement à celle-ci, et la servovanne (30) comprend en outre un électroaimant (305) entourant l'armature (302) ;
dans laquelle l'excitation électrique de l'électroaimant (305) produit un couple sur l'armature (302) pour courber et/ou faire tourner le clapet (301).

3. Servovanne hydraulique selon la revendication 1, dans laquelle l'élément (301 ; 401a à 401c) comprend un élément piézoélectrique (400), et l'excitation électrique de l'élément piézoélectrique (400) est conçue pour courber l'élément (400).

4. Servovanne hydraulique selon la revendication 3, dans laquelle l'élément piézoélectrique (400) comprend un bimorphe piézoélectrique.

5. Servovanne hydraulique selon la revendication 4, dans laquelle le bimorphe (400) est en porte-à-faux à une extrémité axiale (402b) de celui-ci.

6. Servovanne hydraulique selon la revendication 4, dans laquelle le bimorphe comprend une première couche de matériau (401a) et une seconde couche de matériau (401b) prises en sandwich, la première couche de matériau (401a) comprenant un matériau piézoélectrique et la seconde couche de matériau (401b) comprenant un matériau piézoélectrique ou un matériau non piézoélectrique.

7. Servovanne hydraulique selon la revendication 3 ou 4, dans laquelle l'élément piézoélectrique (400) comprend un premier actionneur piézoélectrique (401a) qui s'étend parallèlement à l'axe d'un second actionneur piézoélectrique (401b), dans laquelle, par exemple, le premier et le second actionneurs piézoélectriques (401a, 401b) sont des empilements piézoélectriques.

8. Servovanne hydraulique selon une quelconque revendication précédente, comprenant en outre :
une conduite de retour (330c) reliée fluidiquement aux première et seconde chambres de bobine (304a, 304b) et à la cavité de bobine (304) ; et
une buse (334a, 334b) et un orifice de régulation (336a, 336b) disposés dans la conduite de retour (330c) conçue pour fournir un rétrécissement permettant de régler une pression de fluide dans la conduite de retour (330c).

9. Servovanne hydraulique selon la revendication 8, dans laquelle le rétrécissement est réglable, par exemple, par la buse (334a, 334b) qui est réglable.

10. Procédé de commande d'un actionneur à l'aide de la servovanne hydraulique selon une quelconque revendication précédente, le procédé comprenant :
la fourniture d'un fluide à la cavité (316) par l'intermédiaire de l'au moins une ouverture d'injection (314) ; et **caractérisé par**
la communication du fluide aux ouvertures de réception de fluide (313a, 313b) ;
la courbure et/ou la rotation de l'élément (301 ; 401c) afin d'établir un déséquilibre de pression au niveau du fluide communiqué à chacune des ouvertures de réception de fluide (313a, 313b) ; et
la communication du déséquilibre de pression à la bobine (303) située dans la cavité de bobine (304) et entre la première chambre de bobine (304a) et la seconde chambre de bobine (304b) ;
la communication du déséquilibre de pression entre la cavité de bobine (304) et l'actionneur ; et
la communication du déséquilibre de pression entre la bobine (303) et un actionneur, afin de commander le mouvement de l'actionneur.
